# EUROPEAN PATENT APPLICATION

(11) **EP 3 786 623 A1**
(43) Date of publication of application: **03.03.2021**
(21) Application number: 19194201.0
(22) Date of filing: 28.08.2019
(51) Int. Cl.: G01N 23/20008, G01N 33/68, G01N 23/207

(54) **OPTIMIZED ANALYTE DERIVATIZATION FOR SYNERGISTIC APPLICATION WITH CRYSTAL SPONGE METHOD**

(71) Applicant: Merck Patent GmbH, 64293 Darmstadt (DE)
(72) Inventor: HIERSE, Wolfgang, 64331 Weiterstadt (DE)
(74) Representative: Merck Serono S.A. Intellectual Property

(57) **Abstract**

The invention provides a sample preparation method (100) comprising: providing a sample (10) comprising an organic molecule (20), wherein the organic molecule (20) comprises a target group (21), wherein the target group (21) is a nucleophilic group and/or an acidic group; a derivatization stage (110) comprising: derivatizing the target group (21) of the organic molecule (20) with a moiety (31) comprising one or more of (i) a hydrocarbon comprising group and (ii) a 3rd period atom comprising group, wherein the 3rd period atom is selected from the group consisting of Si, P, and S, thereby providing a derivatized organic molecule (30); a separation stage (120) comprising: subjecting the sample (10) to a separation process to provide a fraction (35) comprising the derivatized organic molecule (30); and a preparation stage (130) comprising: introducing the derivatized organic molecule (30) into a porous single crystal (40), to provide a derivatized organic molecule doped porous single crystal (50).

## Description

### FIELD OF THE INVENTION

The invention relates to a sample preparation method. The invention further relates to an X-ray analysis method. The invention further relates to a system, which may be used for such method(s).

### BACKGROUND OF THE INVENTION

Sample preparation methods based on analyte derivatization and a crystalline sponge are known in the art. Hayakawa et al., "Development of a crystalline sponge tag method for structural analysis of amino acids", symposium abstract ICCC 2018 S58 JST Fujita ACCEL International Symposium Coordination Chemistry for Structural Elucidation, describes the crystalline sponge method for performing X-ray crystal structure analysis, on even trace quantities, without crystallization. It describes that it is difficult to analyze amino acids and related compounds with the crystalline sponge method because of their wide diversities in such properties as size, charge and hydrophobicity. It further describes a crystalline sponge tag method (CS-Tag Method) for tagging amino acids and related compounds based on amino group derivatization with a specific tag.

### SUMMARY OF THE INVENTION

The Crystalline Sponge (CS) method may be a promising new approach for determining full chemical structures of small-molecule organic analytes. It may involve single-crystal X-ray diffraction (SC-XRD), but in comparison with traditional SC-XRD, it may have the advantage that analyte crystallization (which can be difficult or essentially impossible in many cases) may be avoided by absorption of analyte molecules into a specific type of pre-crystallized metal-organic framework (the "Crystalline Sponge"). An additional advantage may be that required analyte quantities may be much smaller than for traditional SC-XRD, namely micrograms or even below.

An attractive application field for the CS Method may be the analysis of organic compounds from biological sources, or organic molecules with biological activity. Unfortunately, applicability of the CS Method in this important area may currently be restricted by one or more limitations related to, for example, solubility, detrimental interactions, and analyte purity:
Highly polar solvents, such as DMSO, DMF or water, may not to be suitable for introducing an analyte into a CS as the solvents may destroy the sponge crystals. Hence, before incorporation of an analyte into the CS, the analyte may have to be dissolved in low-polar or non-polar (organic) solvents (e.g. chloroform or cyclohexane). However, many biologically interesting analytes are polar and/or hydrophilic, which may lead to solubility problems of the analyte.

Many biologically interesting analytes may contain nucleophilic groups and/or active hydrogen atoms (-OH, -COOH, -NH₂ ...). Unfortunately, these groups may not be (fully) compatible with the CS, *i.e.,* they may tend to interact with the CS in detrimental ways, which may lead to disruption of the CS lattice, hampering subsequent structure determination by SC-XRD.

In addition, application of the CS Method may be restricted to pure analytes. If applied to mixtures, the analyte with the highest affinity may adsorb into the CS, despite that this analyte may not be the majority component of an analyte mixture. Hence, application of the CS method to analyte mixtures could therefore lead to a misidentification of analytes.

Hence, it is an aspect of the invention to provide an alternative sample preparation method, which preferably further at least partly obviates one or more of above-described drawbacks. Alternatively or additionally, it is an aspect of the invention to provide an alternative X-ray analysis method, which preferably further at least partly obviates one or more of above-described drawbacks. Alternatively or additionally, it is an aspect of the invention to provide an alternative system, especially for executing one or more of these methods, which preferably further at least partly obviates one or more of above-described drawbacks. The present invention may have as object to overcome or ameliorate at least one of the disadvantages of the prior art, or to provide a useful alternative.

Hence, in a first aspect the invention provides a sample preparation method. The sample preparation method may comprise providing a sample comprising an organic molecule, especially wherein the organic molecule comprises a target group, more especially wherein the target group is a nucleophilic group and/or an acidic group. The sample preparation method may comprise a derivatization stage. The derivatization stage may comprise: derivatizing the target group of the organic molecule with a moiety, especially thereby providing a derivatized organic molecule. The moiety may comprise one or more of (i) a hydrocarbon comprising group and (ii) a 3^{rd} period atom comprising group, especially wherein the 3^{rd} period atom is selected from the group consisting of Si, P, and S. The sample preparation method may comprise a separation stage. The separation stage may comprise: subjecting the sample to a separation process to provide a fraction comprising the (separated) derivatized organic molecule. The sample preparation method may further comprise a preparation stage. The preparation stage may comprise: introducing the derivatized organic molecule (from the fraction) into a porous single crystal, especially to provide a derivatized organic molecule doped porous single crystal.

The method of the invention may address the drawbacks of the prior art. Specifically, polar and/or hydrophilic (target) groups may be derivatized by substitution, especially of active hydrogen, by a moiety, especially a moiety comprising a non-polar group. This substitution may reduce the polarity of the analyte. The substitution may (thus) improve the solubility of the analyte in low-polar or non-polar (organic) solvents. Further, nucleophilic (target) groups may be sterically shielded and/or active hydrogen atoms may be substituted, which may improve the compatibility of the analyte with the porous single crystal, especially a Crystalline Sponge (CS), *i.e.* reduce the detrimental interactions with the porous single crystal.

Further, the method of the invention may facilitate improving analyte purity. The derivatizations may reduce polarity and increase volatility of constituents of an analyte mixture. Thereby, the derivatization of an analyte mixture may facilitate the separation of this mixture into its constituents, especially by use of chromatography, such as by use of gas chromatography (GC).The sample preparation method may comprise: providing a sample comprising an organic molecule. The sample may comprise a biological sample, such as an extract or a tissue sample. The sample may further comprise a chemical sample, such as a (sample taken from a) product stream or a waste stream of a production process. Essentially, the sample may comprise any sample comprising an organic molecule.

The term "organic molecule" herein may refer to any chemical compound that contains carbon. In embodiments, the organic molecule may comprise a biological molecule, especially a biological molecule obtained from a biological source, such as a biological molecule produced by an organism, especially a eukaryote or prokaryote, such as by a plant, animal, fungus, bacterium, or archaeum. In further embodiments, the organic molecule may comprise an active substance (also: "active ingredient" or "active constituent"), especially an active substance with biological activity, *i.e*., an active substance which has a beneficial and/or adverse effect on living matter, such as an active substance with a farmaceutical, cosmetical, and/or nutraceutical effect or a salt, acid and/or base thereof. The term "organic molecule" may herein also refer to a plurality of organic molecules, especially wherein a corresponding plurality of derivatized organic molecules may be separated in the separation stage (see below).

The organic molecule may comprise a target group. The target group may especially be a group which is detrimental for one or more of the solubility of the analyte (in low-polar or non-polar (organic) solvents), the compatibility with a porous single crystal, and/or the separability with one or more other compounds (in an analyte mixture).

In embodiments, the target group may comprise a polar group, and/or a hydrophilic group, and/or a nucleophilic group, and/or an acidic group, and/or an protic group and/or a group comprising active hydrogen atoms (also see further below). Especially, the target group may comprise a nucleophilic group and/or a functional group comprising active hydrogen. Hence, in embodiments, the target group may comprise a polar group. In further embodiments, the target group may comprise a hydrophilic group. In further embodiments, the target group may comprise a nucleophilic group. In further embodiments, the target group may comprise an acidic group. In further embodiments, the target group may comprise a protic group. In further embodiments the target group may comprise a group comprising active hydrogen atoms. In further embodiments, the target group may be selected from the group comprising a nucleophilic group and/or an acidic group, *i.e.,* the target group may be a nucleophilic group and/or an acidic group.

The term "target group" may herein also refer to a plurality of (different) target groups. Hence, in embodiments, the organic molecule may comprise a plurality of (different) target groups, especially a plurality of target groups independently selected from the group comprising a polar group, a hydrophilic group, a nucleophilic group, an acidic group, a protic group, and a group comprising active hydrogen atoms, more especially independently selected from the group comprising a nucleophilic group and/or an acidic group. Examples of target groups are defined below.

As indicated above, in embodiments, the sample preparation method may comprise a derivatization stage. The derivatization stage may comprise derivatizing the organic molecule, *i.e.,* the derivatization stage may comprise transforming the organic molecule into a derivative. Especially, the derivatization of the organic molecule may comprise derivatization of the target group, *i.e.,* transforming the target group into a derivative group. Especially, analysis of the derivative may uniquely identify the organic molecule, *i.e.,* analysis of the derivative group may uniquely identify the target group. In embodiments, the derivatization stage may comprise: derivatizing the target group of the organic molecule with a moiety. The term "moiety" may herein especially refer to a (characteristic) chemical group (of a molecule). The phrase "derivatizing the target group with a moiety" and similar phrases herein may especially refer to substituting at least part of the target group, such as at least an (active) hydrogen, with the moiety.

In embodiments, the moiety may comprise a non-polar group, and/or a hydrophobic group, and/or a protic group. Hence, in embodiments, the moiety may comprise a non-polar group. In further embodiments, the moiety may comprise a hydrophobic group. In further embodiments, the moiety may comprise a protic group.

In further embodiments, the moiety may comprise a hydrocarbon comprising group.

In further embodiments, the moiety may comprise a 3^{rd} period atom comprising group, *i.e.,* the moiety may comprise a group comprising one of the chemical elements in the third row (or period) of the periodic table of chemical elements. Hence, the moiety may comprise a group comprising one or more of Na, Mg, Al, Si, P, S, Cl, or Ar, especially one or more of Si, P, and S. Hence, in further embodiments, the 3^{rd} period atom comprising group comprises a 3^{rd} period atom, especially wherein the 3^{rd} period atom is selected from the group consisting of Si, P, and S. The use of moeieties comprising elements infrequently occuring in natural biological compounds may be beneficial. Such moieties, especially such elements, may be more easily distinguished in an analysis of the derivatized organic molecule, such as in, for example, an X-ray analysis. Hence, moieties comprising a 3^{rd} period atom, especially one or more of Si, P, and S, more especially Si, may be particularly suitable.

The term "moiety" may herein also refer to a plurality of different moeieties, especially wherein the different moeieties are suitable for derivatizing different target groups.

The derivatization stage may thus comprise derivatizing the target group of the organic molecule. Hence, the derivatization stage may (thereby) provide a derivatized organic molecule. The term "derivatized organic molecule" may herein especially refer to a derivative of the organic molecule, especially wherein the derivatized organic molecule comprises a target group derivative. The term "target group derivative" may especially refer to the (original) target group being (uniquely) identifiable based on the chemical structure of the target group derivative (also see further below).

In embodiments, the derivatization stage may comprise the protection of nucleophilic groups and/or the substitution of active hydrogen through alkyl, alkenyl, mono- or polycyclic aromatic or mixed aromatic/aliphatic moieties, and/or the attachment of one or several such moieties, also in combination, through linker groups or 3^{rd} period atoms such as Si and/or P (also see further below).

In specific embodiments, the derivatization stage may comprise methylation of a target group comprising -OH with a reactant comprising CH₃I, wherein H (of -OH) is substituted by CH3. In such embodiment, the derivatized organic molecule may thus comprise an OCH₃ group. In further embodiments, the methylating reactant CH₃I, or another methylating reactant, may derivatize both -OH and -COOH target groups simultaneously.

The sample preparation method may further comprise a separation stage. The saparation stage may comprise subjecting the sample to a separation process. The separation process may be suitable to separate the derivatized organic molecule from one or more other compounds in the sample, such as from some remaining (underivatized) organic molecule due to incomplete derivatization. Especially, the sample may comprise an analyte mixture. The separation process may especially comprise chromatography, such as gas chromatography and/or liquid chromatography. In further embodiments, the separation process may comprise gas chromatography (GC). In further embodiments, the separation process may comprise liquid chromatography (LC).

In embodiments, the sample preparation method, especially the separation stage, may provide a fraction comprising the derivatized organic molecule. In further embodiments, the sample preparation method may provide a fraction comprising the derivatized organic molecule in a solvent. The fraction may essentially only comprise the derivatized organic molecule, *i.e.,* the fraction may be substantially pure. For example, in embodiments wherein the fraction comprises the derivatized organic molecule in a solvent, at least 50% of the organic non-solvent molecules may be provided by the derivatized organic molecule, such as at least 60%, especially at least 70%, such as at least 80%, especially at least 90%, such as at least 95%, especially at least 98%, including 100%.

The separation stage may comprise the use of collection tubes and/or adsorbents. The separation stage may comprise exposing the sample to a fraction collector configured to cool the sample with liquid nitrogen to trap volatile compounds. The trapped compounds may then be desorbed by heating or extracted with a solvent, especially an organic solvent, such as hexane. Liquid extraction may generally be preferable because the derivatized organic molecule may preferably be in solution for subsequent introduction into the porous single crystal.

In further embodiments, the sample preparation method may provide a plurality of fractions, wherein a fraction of the plurality of fractions comprises the derivatized organic molecule. In embodiments, the sample preparation method may provide a plurality of fractions, especially wherein two or more of the plurality of fractions comprise (two or more) different derivatized organic molecules.

In embodiments, the sample preparation method may further comprise a preparation stage. The preparation stage may comprise introducing the derivatized organic molecule (from the fraction) into a porous single crystal, *i.e.,* the preparation stage may comprise contacting the fraction (comprising the derivatized organic molecule) with a porous single crystal, especially such that the derivatized organic molecule is introduced into the porous single crystal. The phrase "introduced into the porous single crystal" and similar phrases herein may especially refer to the porous single crystal absorbing the derivatized organic molecule, wherein the derivatized organic molecule is essentially trapped at a binding site in the porous single crystal, especially wherein the derivatized organic molecule is rendered oriented and observable for X-ray analysis (see further below).

The term "porous single crystal" may herein especially refer to a porous (crystal) compound having a three-dimensional framework and three-dimensionally regularly-arranged pores and/or hollows. In embodiments, the porous single crystal may comprise a crystalline sponge. In further embodiments, the porous single crystal may comprise a porous single crystal as described in EP3269849A1 and/or EP3118610A1, which are hereby herein incorporated by reference.

In embodiments, the sample preparation method may provide a derivatized organic molecule doped porous single crystal, *i.e.,* the porous single crystal doped with the derivatized organic molecule. Especially, the porous single crystal may be doped with a plurality of (same) derivatized organic molecules, especially wherein each of the plurality of the derivatized organic molecules is rendered oriented by the porous single crystal.

Hence, in embodiments the sample preparation method may comprise: providing a sample comprising an organic molecule, wherein the organic molecule comprises a target group, wherein the target group is a nucleophilic group and/or an acidic group; a derivatization stage comprising: derivatizing the target group of the organic molecule with a moiety comprising one or more of (i) a hydrocarbon comprising group and (ii) a 3^{rd} period atom comprising group, wherein the 3^{rd} period atom is selected from the group consisting of Si, P, and S, thereby providing a derivatized organic molecule; a separation stage comprising: subjecting the sample to a separation process to provide a fraction comprising the derivatized organic molecule; a preparation stage comprising: introducing the derivatized organic molecule (from the fraction) into a porous single crystal, to provide a derivatized organic molecule doped porous single crystal. In embodiments, the organic molecule may be selected from the group consisting of an organic biomolecule, *i.e.,* the organic molecule may comprise an organic biomolecule.

In embodiments, the sample may comprise a solvent, especially an apolar or non-polar (organic) solvent (for the organic molecule). In further embodiments, the sample may comprise an apolar (organic) solvent. In further embodiments, the sample may comprise a non-polar (organic) solvent.

In further embodiments, the sample may comprise a protic solvent, especially wherein the separation stage further comprises executing a solvent exchange by replacing at least part of the protic solvent by an aprotic solvent.

In further embodiments, the solvent may especially be selected for compatibility with the porous single crystal. Typically, highly polar solvents such as DMSO, DMF or water may not be suitable since they may destroy the porous single crystal. Hence, in general, the solvent may comprise an apolar or non-polar (organic) solvent.

Hence, in embodiments, the separation stage may comprise executing a solvent exchange by replacing at least part of a first solvent, such as a protic solvent, by a second solvent, such as an aprotic solvent. Especially, the second solvent may be more suitable for the next step/stage. For example, in embodiments, the separation stage may comprise executing a solvent exchange before a chromatography process to provide a second solvent that is more suitable for the chromatography process, such as more suitable for LC and/or GC. In further embodiments, the separation stage may comprise executing a solvent exchange after a chromatography process to provide a second solvent that is more suitable for the preparation stage, such as more suitable for introducing the derivatized organic molecule into the porous single crystal.

In further embodiments, the solvent may comprise a non-polar solvent, especially a non-polar solvent selected from the group comprising trichloro methane (chloroform), cyclohexane, hexane, n-pentane, and n-heptane.

In further embodiments, the solvent may comprise a polar solvent, especially a polar solvent selected from the group comprising dichloromethane, chloroform, 1,2-dichloroethane, 1,2-dimethoxyethane, THF, acetone, EthylMethylKetone, acetyl acetate, methanol, ethanol, 1-propanol, and 2-propanol. In particular, the polar solvent may be selected to be suitable to dissolve the derivatized organic molecule in a concentration of at least 1 mg/ml.

In further embodiments, the sample preparation method may comprise a solvent exchange stage, by which the derivatized molecule is transferred from the solvent or solvent mixture used in the separation stage into the solvent or solvent mixture used in the (subsequent) preparation stage.

In embodiments, the porous single crystal may comprise a metal-organic framework material. A metal-organic framework material may comprise an organic-inorganic hybrid crystalline porous material comprising an essentially regular array of metal ions (or clusters) surrounded by organic linkers.

In further embodiments, the metal-organic framework material may be tri-pyridinyl triazine (tpt)-based, especially tpt-ZnX₂ based, such as 2 tpt . 3 ZnX₂ based, especially where X comprises an element selected from the group comprising Cl, Br and I. Especially, X = Cl, Br or I. In further embodiments, the metal-organic framework material may comprise a cartridge-based system. In further embodiments, the metal-organic framework material may be tpt-ZnCl₂ based. In further embodiments, the metal-organic framework material may be tpt-Znbr₂ based. In further embodiments, the metal-organic framework material may be tpt-ZnI₂ based. In further embodiments, tpt-ZnX₂ may comprise two different elements X selected from the group comprising Cl, Br, and I. However, in general, tpt-ZnX₂ may comprise twice the same element selected from the group comprising Cl, Br, and I.

The term "cartridge-based system" may especially refer to a biporous coordination network. The term "biporous coordination network" and similar terms may herein especially refer to a porous coordination network comprising two (or more) distinct large channels, especially wherein the pores are arranged and surrounded by aromatic structures. Such a biporous coordination network may have the ability to take up two (or more) guests independently, thereby allowing the simultaneous isolation of two different guests. Such biporous materials may be composed of alternatively layered 2,4,6-tris(4-pyridyl)-1,3,5-triazine (TPT) and triphenylene; especially wherein the TPT ligand forms infinite 3D network via coordination to ZnI2, whereas the triphenylene is especially involved in the 3D framework without forming any covalent or coordination bonds with other components. The noncovalently intercalated triphenylene may contain suitable functional groups without causing any change in the biporous coordination networks.

In particular, the term "biporous coordination networks" may especially refer to the coordination networks described by Ohmori et al., 2005, "a Two-in-One Crystal: Uptake of Two Different Guests into Two Distinct Channels of a Biporous Coordination Network", Angewandte Chemie International Edition, 44, 1962-1964 and/or Kawano et al., 2007, "The Modular Synthesis of Functional Porous coordination Networks", Journal of the American Chemical Society, 129, 15418-15419, which are hereby herein incorporated by reference.

Tpt-ZnX₂ based frameworks may be particularly suitable given the flexibility due to interpenetrating networks, the electron deficiency due to TPT ligands, and the possibilities to form weak non-covalent type interactions between the porous single crystal and the derivatized organic molecule.

In embodiments, the organic molecule may comprise a target group selected from the group comprising a polar group, such as -OH and -SH, a hydrophilic group, such as -OH and -COOH, a nucleophilic group, such as -OH and NH₂, an acidic group, such as -COOH, a protic group, and a group comprising active hydrogen atoms, more especially independently selected from the group comprising a nucleophilic group and/or an acidic group.

In further embodiments, the target group may be selected from the group comprising -OH, -COOH, -NH₂, -NRH, and -SH, especially from the group consisting of -OH, -COOH, -NH₂, -NRH, and -SH.

Hence, in embodiments the target group may comprise -OH. Especially, the target group may comprise an alcohol group selected from the group comprising a primary alcohol, a secondary alcohol, a tertiary alcohol, and a phenolic hydroxyl. In further embodiments, the target group may comprise a primary alcohol. In further embodiments, the target group may comprise a secondary alcohol. In further embodiments the target group may comprise a tertiary alcohol. In further embodiments, the target group may comprise a phenolic hydroxyl.

In further embodiments, the target group may (thus) comprise -COOH.

In further embodiments, the target group may (thus) comprise -NRH, wherein R comprises any group comprising C and/or H. Especially, the target group may comprise a nitrogeneous group selected from the group comprising a primary amine, a secondary amine, and a primary amide. In further embodiments, the target group may comprise a primary amine (-NH₂). In further embodiments, the target group may comprise a secondary amine. In further embodiments, the target group may comprise an amide bond, especially a primary amide.

In further embodiments, the target group may comprise -SH.

In embodiments, the target group may comprise a side group of the organic molecule. In further embodiments, the target group may comprise an end group of the organic molecule.

In embodiments, the moiety may comprise a hydrocarbon comprising group. The hydrocarbon comprising group may especially comprise a non-polar group.

In further embodiments, the moiety may comprise an aliphatic group.

In further embodiments, the moiety may comprise an alkyl group, especially an alkyl group selected from the group comprising methyl, ethyl, propyl, isopropyl, butyl and tert-isobutyl. In principle, the moiety may comprise any alkyl group, but relatively small alkyl groups, such as methyl, ethyl, propyl, isopropyl, butyl and tert-isobutyl, may be preferable for introduction of the derivatized organic molecule into a porous single crystal. In further embodiments, the moiety may comprise a methyl group, and the method may comprise derivatizing the target group with methyl, *i.e.,* the moiety may comprise methyl. In further embodiments the moiety may comprise ethyl. In further embodiments, the moiety may comprise propyl, in further embodiments, the moiety may comprise isopropyl. In further embodiments, the moiety may comprise butyl. In further embodiments, the moiety may comprise tert-isobutyl.

The use of small moieties, such as (small) alkyls, may be beneficial as small size may be an advantage for introduction into the porous single crystal.

In further embodiments, the moiety may comprise an alkenyl group, especially an allyl group.

In further embodiments, the moiety may comprise an aromatic group, especially a phenyl group or a benzyl group. In further embodiments, the moiety may comprise a phenyl group. In principle, the moiety may comprise any aromatic group, but a relatively small aromatic group, such as a phenyl group, may be preferable for introduction of the derivatized organic molecule into a porous single crystal. Hence, in embodiments, the aromatic group may be selected from the group consisting of monocyclic aromatic compounds. In further embodiments, the moiety may comprise a benzyl group. Moieties comprising an aromatic group may be particularly beneficial for introduction of the derivatized organic molecule into the porous single crystal, as there may be an improved affinity of the derivatized organic molecule with the pi-electron systems of the porous single crystal, especially the metal-organic framework material, such as especially a tri-pyridinyl triazine (TPT)-based material. This improved affinity may facilitate introduction, especially absorption, of the derivatized organic molecule into the porous single crystal.

In further embodiments, the moiety may comprise a mixed aromatic/aliphatic group, especially a mixed aromatic/aliphatic group selected from the group comprising benzyl, p-methoxybenzyl, 3,4-dimethoxybenzyl, benzylhydryl, triphenylmethyl, tosyl, and fluorenylmethyl. In further embodiments, the moiety may comprise benzyl. In further embodiments, the moiety may comprise p-methoxybenzyl. In further embodiments, the moiety may comprise 3,4-dimethoxybenzyl. In further embodiments, the moiety may comprise benzylhydryl. In further embodiments, the moiety may comprise triphenylmethyl. In further embodiments, the moiety may comprise tosyl. In further embodiments, the moiety may comprise fluorenylmethyl.

In further embodiments, the moiety may comprise a 3^{rd} period atom comprising group, especially wherein the 3^{rd} period atom is selected from the group consisting of Si, P, and S. In further embodiments, the 3^{rd} period atom may be P, *i.e.,* the moiety may comprise P. In further embodiments, the 3^{rd} period atom may be S, *i.e.,* the moiety may comprise S.

In further embodiments, the 3^{rd} period atom may be Si, *i.e.,* the moiety may comprise Si. In further embodiments, the moiety may comprise a group selected from the group comprising -SiR₃, -SiArR₂, -SiAr₂R, -SiAr₃, wherein R is an aliphatic group, especially an aliphatic group (independently) selected from the group consisting of methyl, ethyl, propyl, isopropyl, and wherein Ar is an (independently selected) aromatic group, especially -C₆H₅. In further embodiments, the moiety may comprise -SiR₃. In further embodiments, the moiety may comprise -SiArR₂. In further embodiments, the moiety may comprise -SiAr₂R. In further embodiments, the moiety may comprise -SiAr₃. In further embodiments, R may comprise methyl. In further embodiments, R may comprise ethyl. In further embodiments, R may comprise propyl. In further embodiments, R may comprise isopropyl.

In embodiments, the moiety may be selected to be versatile, *i.e.,* the moeity may be used to protect a plurality of different types of target groups. In particular, the reactant may be selected to be versatile with regards to providing the moiety to a plurality of different target groups. The use of a versatile moiety may be preferable due to practical convenience, as well as due to the target group(s) being unknown. In particular, moieties comprising a 3^{rd} period atom selected from the group consisting of Si, P and S, especially Si, may be versatile.

In embodiments, the moiety may comprise a linker group. Especially, the moiety may be attached to a target group via a linker group. The linker group may be selected from the group comprising an ether, an ester, an oxycarbonyl, an amide, a carbonate, and a carbamate. In further embodiments, the linker group may comprise an ether. In further embodiments, the linker group may comprise an ester. In further embodiments, the linker group may comprise an oxycarbonyl. In further embodiments, the linker group may comprise an amide. In further embodiments, the linker group may comprise a carbonate. In further embodiments, the linker group may comprise a carbamate.

In specific embodiments, the target group may comprise -OH and the reactant may comprise CH₃COCl such that -OH is derivatized to the ester -OC(O)CH₃. In such embodiment, the moiety CH₃ is attached to the organic molecule via a linker group comprising an ester.

The phrase "derivatizing the target group of the organic molecule with a moiety" may herein refer to contacting the organic molecule with a reactant such that the target group is derivatized with the moiety.

The reactant may comprise one or more compounds selected from the group comprising N,O-bis-trimethylsilyl-acetamide (BSA), trimethylsilyl-trifluoracetamide (BSTFA), N,N-Dimethylformamide-Dimethylacetal (DMF-DMA), heptafluorobutyric acid anhydride (HFBA), hexamethyldisilazan (HMDS), N-methyl-bis(heptafluorobutyramide) (MBHFBA), N-methyl-bis(trifluoroacetamide) (MBTFA), N-Methyl-N-trimethylsilyl-heptafluorbutyramide (MSHFBA), N-Methyl-N-trimethylsilyl-trifluoracetamide (MSTFA), trifluoroacetic acid anhydride (TFAA), trimethylchlorosilane (TMCS), trimethylsulfoniumhydroxide (TMSH), N-trimethylsilyl-imidazole (TSIM), methanol - TMCS (MeOH/TMCS), TSIM - pyridine 11:39 (SILYL-1139), HMDS - TMCS 2:1 (SILYL-21), HMDS - TMCS - pyridine 2:1:10 (SILYL-2110), BSTFA - TMCS 99:1 (SILYL-991), N,O-bis(tert-butyldimethylsilyl)acetamide, N,O-bis(tert-butyldimethylsilyl)trifluoroacetamide, bis(dimethylamino)dimethylsilane, N,O-bis(trimethylsilyl)-carbamate, N,N-bis(trimethylsilyl)methylamine, N,O-bis(trimethylsilyl)trifluoroacetamide, N,O-bis(trimethylsilyl)trifluoroacetamide with trimethylchlorosilane, N,O-bis(trimethylsilyl)trifluoroacetamide with trimethylchlorosilane, N,N'-bis(trimethylsilyl)urea purum, bromotrimethylsilane purum, BSA+TMCS, tert-butyl(chloro)diphenylsilane, tert-butyldimethylsilyl chloride, N-tert-butyldimethylsilyl-N-methyltrifluoroacetamide, N-tert-butyldimethylsilyl-N-methyltrifluoroacetamide, N-tert-butyldimethylsilyl-N-methyltrifluoroacetamide with 1% tert-butyldimethylchlorosilane, N-tert-butyldimethylsilyl-N-methyltrifluoroacetamide with 1% tert-butyldimethylchlorosilane, tert-butyldimethylsilyl trifluoromethanesulfonate, chlorodimethyl(pentafluorophenyl)silane, chlorotriethylsilane, chlorotrimethylsilane, dichlorodimethylsilane, 1,3-dimethyl-1,1,3,3-tetraphenyldisilazane, N,N-dimethyltrimethylsilylamine, hexamethyldisilazane, hexamethyldisiloxane, HMDS, HMDS+TMCS 3:1, N-methyl-N-trimethylsilylacetamide, N-methyl-N-trimethylsilylheptafluorobutyramide, N-methyl-N-(trimethyl-d9-silyl)trifluoroacetamide, N-methyl-N-(trimethylsilyl)trifluoroacetamide, N-methyl-N-trimethylsilyltrifluoroacetamide activated I, N-methyl-N-trimethylsilyltrifluoroacetamide activated II, N-methyl-N-trimethylsilyltrifluoroacetamide activated III, N-methyl-N-(trimethylsilyl)trifluoroacetamide with 1% trimethylchlorosilane, 1,1,3,3-tetramethyl-1,3-diphenyldisilazane, 1-(trimethylsilyl)imidazole, 1-(trimethylsilyl)imidazole - pyridine mixture (CAS Number: 8077-35-8), acetic anhydride,) boron trichloride - methanol, 2-bromoacetophenone, 4-bromophenacyl trifluoromethanesulfonate, butylboronic acid, ethyl trifluoromethanesulfonate, heptafluorobutyric anhydride, N-heptafluorobutyrylimidazole, hexyl chloroformate, hydrogen chloride - 1-butanol, (S)-2-hydroxybutyric acid, isobutyric acid, methanolic HCl 3 M HCl in methanol, (±)-α-methoxy-α-trifluoromethylphenylacetic acid, N-methyl-bis-heptafluorobutyramide, N-methyl-bis(trifluoroacetamide), 2,3,4,5,6-pentafluorobenzoic anhydride, 2,2,6,6-tetramethyl-3,5-heptanedione, 2-thenoyltrifluoroacetone, trifluoroacetic anhydride, 2,2,2-trifluoro-N-methyl-N-(trimethylsilyl)acetamide 2,2,2-trifluoro-N-methyl-N-(trimethylsilyl)acetamide, boron trichloride, boron trifluoride, 2-chloro-N,N-dimethylethylamine hydrochloride, diazald®, 2,3-dihydroxy-biphenyl, N,N-dimethylformamide di-tert-butyl acetal, N,N-dimethylformamide dimethyl acetal, N,N-dimethylformamide dipropyl acetal, dimethyl sulfate, O-ethylhydroxylamine hydrochloride, 1,1,1,3,3,3-hexafluoro-2-propanol, methoxyamine hydrochloride, methyl trifluoromethanesulfonate, 2,3,4,5,6-pentafluorobenzyl bromide, O-(2,3,4,5,6-pentafluorobenzyl)hydroxylamine hydrochloride, 2,2,3,3,3-pentafluoro-1-propanol, sodium tetrapropylborate, trimethylphenylammonium hydroxide, (trimethylsilyl)diazomethane, and trimethylsulfonium hydroxide.

In further embodiments, the reactant may comprise N,O-bis-trimethylsilylacetamide (BSA). In further embodiments, the reactant may comprise trimethylsilyl-trifluoracetamide (BSTFA). In further embodiments, the reactant may comprise N,N-dimethylformamide-dimethylacetal (DMF-DMA). In further embodiments, the reactant may comprise heptafluorobutyric acid anhydride (HFBA). In further embodiments, the reactant may comprise hexamethyldisilazan (HMDS). In further embodiments, the reactant may comprise N-methyl-bis(heptafluorobutyramide) (MBHFBA). In further embodiments, the reactant may comprise N-methyl-bis(trifluoroacetamide) (MBTFA). In further embodiments, the reactant may comprise N-methyl-N-trimethylsilyl-heptafluorbutyramide (MSHFBA). In further embodiments, the reactant may comprise N-methyl-N-trimethylsilyl-trifluoracetamide (MSTFA). In further embodiments, the reactant may comprise trifluoroacetic acid anhydride (TFAA). In further embodiments, the reactant may comprise trimethylchlorosilane (TMCS). In further embodiments, the reactant may comprise trimethylsulfoniumhydroxide (TMSH). In further embodiments, the reactant may comprise N-trimethylsilyl-imidazole (TSIM). In further embodiments, the reactant may comprise methanol - TMCS (MeOH/TMCS). In further embodiments, the reactant may comprise TSIM - pyridine 11:39 (SILYL-1139). In further embodiments, the reactant may comprise HMDS - TMCS 2:1 (SILYL 21). In further embodiments, the reactant may comprise HMDS - TMCS - pyridine 2:1:10 (SILYL-2110). In further embodiments, the reactant may comprise BSTFA - TMCS 99:1 (SILYL-991). In further embodiments, the reactant may comprise N,O-bis(tert-butyldimethylsilyl)acetamide. In further embodiments, the reactant may comprise N,O-bis(tert-butyldimethylsilyl)-trifluoroacetamide. In further embodiments, the reactant may comprise bis(dimethylamino)-dimethylsilane. In further embodiments, the reactant may comprise N,O-bis(trimethylsilyl)-carbamate. In further embodiments, the reactant may comprise N,N-bis(trimethylsilyl)methylamine. In further embodiments, the reactant may comprise N,O-bis(trimethylsilyl)trifluoroacetamide. In further embodiments, the reactant may comprise N,O-bis(trimethylsilyl)-trifluoroacetamide with trimethylchlorosilane. In further embodiments, the reactant may comprise N,O-bis(trimethylsilyl)trifluoroacetamide with trimethylchlorosilane. In further embodiments, the reactant may comprise N,N'-bis(trimethylsilyl)urea purum. In further embodiments, the reactant may comprise bromotrimethylsilane purum. In further embodiments, the reactant may comprise BSA+TMCS. In further embodiments, the reactant may comprise tert-butyl(chloro)diphenylsilane. In further embodiments, the reactant may comprise tert-butyldimethylsilyl chloride. In further embodiments, the reactant may comprise N-tert-butyldimethylsilyl-N-methyltrifluoroacetamide. In further embodiments, the reactant may comprise N-tert-butyldimethylsilyl-N-methyltrifluoroacetamide. In further embodiments, the reactant may comprise N-tert-butyldimethylsilyl-N-methyltrifluoroacetamide with 1% tert-butyldimethylchlorosilane. In further embodiments, the reactant may comprise N-tert-butyldimethylsilyl-N-methyltrifluoroacetamide with 1% tert-butyldimethylchlorosilane. In further embodiments, the reactant may comprise tert-butyldimethylsilyl trifluoromethanesulfonate. In further embodiments, the reactant may comprise chlorodimethyl(pentafluorophenyl)silane. In further embodiments, the reactant may comprise chlorotriethylsilane. In further embodiments, the reactant may comprise chlorotrimethylsilane. In further embodiments, the reactant may comprise dichlorodimethylsilane. In further embodiments, the reactant may comprise 1,3-dimethyl-1,1,3,3-tetraphenyldisilazane. In further embodiments, the reactant may comprise N,N-dimethyltrimethylsilylamine. In further embodiments, the reactant may comprise hexamethyldisiloxane. In further embodiments, the reactant may comprise HMDS+TMCS 3:1. In further embodiments, the reactant may comprise N-methyl-N-trimethylsilylacetamide. In further embodiments, the reactant may comprise N-methyl-N-trimethylsilylheptafluorobutyramide. In further embodiments, the reactant may comprise N-methyl-N-(trimethyl-d9-silyl)trifluoroacetamide. In further embodiments, the reactant may comprise N-methyl-N-(trimethylsilyl)trifluoroacetamide. In further embodiments, the reactant may comprise N-methyl-N-trimethylsilyltrifluoroacetamide activated I. In further embodiments, the reactant may comprise N-methyl-N-trimethylsilyltrifluoroacetamide activated II. In further embodiments, the reactant may comprise N-methyl-N-trimethylsilyltrifluoroacetamide activated III. In further embodiments, the reactant may comprise N-methyl-N-(trimethylsilyl)trifluoroacetamide with 1% trimethylchlorosilane. In further embodiments, the reactant may comprise 1,1,3,3-tetramethyl-1,3-diphenyldisilazane. In further embodiments, the reactant may comprise 1-(trimethylsilyl)imidazole. In further embodiments, the reactant may comprise 1-(trimethylsilyl)imidazole - pyridine mixture. In further embodiments, the reactant may comprise acetic anhydride. In further embodiments, the reactant may comprise boron trichloride - methanol. In further embodiments, the reactant may comprise 2-bromoacetophenone. In further embodiments, the reactant may comprise 4-bromophenacyl trifluoromethanesulfonate. In further embodiments, the reactant may comprise butylboronic acid. In further embodiments, the reactant may comprise ethyl trifluoromethanesulfonate. In further embodiments, the reactant may comprise heptafluorobutyric anhydride. In further embodiments, the reactant may comprise N-heptafluorobutyrylimidazole. In further embodiments, the reactant may comprise hexyl chloroformate. In further embodiments, the reactant may comprise hydrogen chloride - 1-butanol. In further embodiments, the reactant may comprise (S)-2-hydroxybutyric acid. In further embodiments, the reactant may comprise isobutyric acid. In further embodiments, the reactant may comprise methanolic HCl 3 M HCl in methanol. In further embodiments, the reactant may comprise (±)-α-methoxy-α-trifluoromethylphenylacetic acid. In further embodiments, the reactant may comprise N-methyl-bis-heptafluorobutyramide. In further embodiments, the reactant may comprise N-methyl-bis(trifluoroacetamide). In further embodiments, the reactant may comprise 2,3,4,5,6-pentafluorobenzoic anhydride. In further embodiments, the reactant may comprise 2,2,6,6-tetramethyl-3,5-heptanedione. In further embodiments, the reactant may comprise 2-thenoyltrifluoroacetone. In further embodiments, the reactant may comprise trifluoroacetic anhydride. In further embodiments, the reactant may comprise 2,2,2-trifluoro-N-methyl-N-(trimethylsilyl)acetamide 2,2,2-trifluoro-N-methyl-N-(trimethylsilyl)acetamide. In further embodiments, the reactant may comprise boron trichloride. In further embodiments, the reactant may comprise boron trifluoride. In further embodiments, the reactant may comprise 2-chloro-N,N-dimethylethylamine hydrochloride. In further embodiments, the reactant may comprise N-methyl-N-nitroso-p-toluenesulfonamide (Diazald®). In further embodiments, the reactant may comprise 2,3-dihydroxy-biphenyl. In further embodiments, the reactant may comprise N,N-dimethylformamide di-tert-butyl acetal. In further embodiments, the reactant may comprise N,N-dimethylformamide dimethyl acetal. In further embodiments, the reactant may comprise N,N-dimethylformamide dipropyl acetal. In further embodiments, the reactant may comprise dimethyl sulfate. In further embodiments, the reactant may comprise O-ethylhydroxylamine hydrochloride. In further embodiments, the reactant may comprise 1,1,1,3,3,3-hexafluoro-2-propanol. In further embodiments, the reactant may comprise methoxyamine hydrochloride. In further embodiments, the reactant may comprise methyl trifluoromethanesulfonate. In further embodiments, the reactant may comprise 2,3,4,5,6-pentafluorobenzyl bromide. In further embodiments, the reactant may comprise O-(2,3,4,5,6-pentafluorobenzyl)hydroxylamine hydrochloride. In further embodiments, the reactant may comprise 2,2,3,3,3-pentafluoro-1-propanol. In further embodiments, the reactant may comprise sodium tetrapropylborate. In further embodiments, the reactant may comprise trimethylphenylammonium hydroxide. In further embodiments, the reactant may comprise (trimethylsilyl)diazomethane. In further embodiments, the reactant may comprise and trimethylsulfonium hydroxide. In embodiments wherein the target group comprises -COOH, the derivatization stage may comprise derivatization of the target group into an acetal group.

In embodiments, the derivatization stage may comprise substitution of (active) hydrogen by a moiety.

In further embodiments, the derivatization stage may comprise attaching a moiety to a target group via a linker group, such as a linker group selected from the group comprising an ether, an ester, an oxycarbonyl, an amide, a carbonate, and a carbamate. In further embodiments, the linker group may comprise an ether. In further embodiments, the linker group may comprise an ester. In further embodiments, the linker group may comprise an oxycarbonyl. In further embodiments, the linker group may comprise an amide. In further embodiments, the linker group may comprise a carbonate. In further embodiments, the linker group may comprise a carbamate.

In embodiments, the derivatization stage may comprise silylation of the target group, *i.e.,* the derivatization stage may comprise substituting an (active) hydrogen group with a moiety comprising a 3^{rd} period atom comprising group, wherein the 3^{rd} period atom comprises Si, especially with a moiety selected from the group comprising -SiR₃, -SiArR₂, -SiAr₂R, -SiAr₃, wherein R is an aliphatic group, especially an aliphatic group (independently) selected from the group consisting of methyl, ethyl, propyl, isopropyl, and wherein Ar is an (independently selected) aromatic group, especially -C₆H₅.

The phrase "derivatizing the target group of the organic molecule with a moiety" may herein refer to contacting the organic molecule with a reactant such that the target group is derivatized with the moiety.

Hence, in embodiments, the derivatization stage may comprise contacting the organic molecule with a reactant such that the target group is derivatized with methyl, *i.e.,* the method, especially the derivatization stage, may comprise derivatizing the target group with methyl. In further embodiments, the derivatization stage may comprise derivatizing the target group with alkyl. In further embodiments, the derivatization stage may comprise derivatizing the target group with ethyl. In further embodiments, the derivatization stage may comprise derivatizing the target group with propyl. In further embodiments, the derivatization stage may comprise derivatizing the target group with isopropyl. In further embodiments, the derivatization stage may comprise derivatizing the target group with butyl. In further embodiments, the derivatization stage may comprise derivatizing the target group with tert-isobutyl. In further embodiments, the derivatization stage may comprise derivatizing the target group with alkenyl. In further embodiments, the derivatization stage may comprise derivatizing the target group with allyl. In further embodiments, the derivatization stage may comprise derivatizing the target group with an aromatic group. In further embodiments, the derivatization stage may comprise derivatizing the target group with phenyl. In further embodiments, the derivatization stage may comprise derivatizing the target group with a mixed aromatic/aliphatic group. In further embodiments, the derivatization stage may comprise derivatizing the target group with benzyl. In further embodiments, the derivatization stage may comprise derivatizing the target group with p-methoxybenzyl. In further embodiments, the derivatization stage may comprise derivatizing the target group with 3,4-dimethoxybenzyl. In further embodiments, the derivatization stage may comprise derivatizing the target group with benzylhydryl. In further embodiments, the derivatization stage may comprise derivatizing the target group with triphenylmethyl. In further embodiments, the derivatization stage may comprise derivatizing the target group with tosyl. In further embodiments, the derivatization stage may comprise derivatizing the target group with fluorenylmethylen. In further embodiments, the derivatization stage may comprise derivatizing the target group with -SiR₃ In further embodiments, the derivatization stage may comprise derivatizing the target group with -SiArR₂ In further embodiments, the derivatization stage may comprise derivatizing the target group with -SiAr₂R In further embodiments, the derivatization stage may comprise derivatizing the target group with -SiAr₃.

In embodiments, the derivatization stage may comprise silylation of the organic molecule, *i.e.,* the derivatization stage may comprise contacting the organic molecule with a silylation agent. The silylation agent may comprise one or more of bis(trimethylsilyl) acetamide (BSA), N,O-bis(trimethylsilyl) trifluoroacetamide (BSTFA), and hexamethyl disilazane (HMDS).

In further embodiments, the silylation agent may comprise BSA, especially BSA in mixture with trimethyl chlorosilane (TMCS).

In further embodiments, the silylation agent may comprise BSTFA, especially BSTFA in mixture with trimethyl chlorosilane (TMCS).

In further embodiments, the silylation agent may comprise HMDS.

Derivatization with moieties comprising 3^{rd} period atoms may be particularly beneficial: the derivizations with such moeities may be applicable to mixtures, may be multi-purpose, may be distinguishable from natural moieties (especially for Si), and may provide beneficial anomolous scattering (for Si). Especially, silylation may be applicable to mixtures, silylation reactions may be multi-purpose, silyl groups may be distinguishable from natural moieties, and/or Si may provide beneficial anomolous scattering.

Silylation may be directly applied to mixtures of organic molecules, and the resulting mixture of derivatized, especially silylated, organic molecules may be highly conducive to a separation process such as gas chromatography (GC) and/or preparative GC. This may provide the advantage that a sample, especially an analyte mixture, can be derivatized in a single step, rather than separately/sequentially for each single organic molecule after separation. Further, the separation stage may be synergistically supported.

Silylation reactions may be multi-purpose, *i.e.,* the same reagent may derivatize different target groups simultaneously, such as derivatize -OH, -COOH and -NH₂ simultaneously. This may be beneficial as the organic molecule may be an (at least partially) unknown molecule, *i.e.,* not all target groups may be known from the outset. Silylation may facilitate avoiding sequential derivatization for different target groups.

The silyl groups introduced through derivatization may by their chemical nature be clearly distinguishable from naturally occurring moieties. By contrast, this may not be the case with alternative derivatization of -OH into -OCH3: In this case, there would be an ambiguity whether the methoxy group (for example observed using SC-XRD) was part of the original organic molecule, or whether it was generated from -OH through derivatization.

Si has anomalous scattering that is much larger than for C, N, O as majority atomic species in typical biomolecule analytes. At CuKα wavelength, anomalous scattering of Si may be circa 10 times as large as for O and may be circa 30 times as large as for C. Hence, chiral silyl groups (for example with Si as chiral center of 4 different substituents, or through the attachment of a chiral substituent to Si) in the derivatized organic molecule can improve the resolution of analyte chirality through SC-XRD.

As an additional attractive feature, the comparatively high electron density of the Si atom may make it easily recognizable in SC-XRD.

For moieties comprising an aromatic group, such as a phenyl group, especially silyl groups comprising a phenyl residue, there may be an improved affinity of the derivatized organic molecule with the pi-electron systems of the porous single crystal, especially the metal-organic framework material, such as especially a tri-pyridinyl triazine (TPT)-based material. This improved affinity may facilitate introduction, especially absorption, of the derivatized organic molecule into the porous single crystal. In embodiments, the separation stage may further comprise executing a solvent exchange by replacing at least part of a first solvent by a second solvent. Especially, the sample may (initially) comprise a first solvent, such as a protic solvent, and the separation stage may comprise replacing at least part of the first solvent by a second solvent, such as an aprotic solvent, *i.e.,* the separation stage may comprise a fraction comprising the derivatized organic molecule, wherein the fraction further comprises a second solvent, especially an aprotic solvent. In embodiments, the separation stage may comprise subjecting the sample to a chromatography process. In further embodiments, the separation stage may comprise subjecting the sample to a liquid chromatography (LC) process or a gas chromatography (GC) process. In further embodiments, the separation stage may comprise subjecting the sample to an LC process. In further embodiments, the separation stage may comprise subjecting the sample to a GC process.

The LC process and the GC process, especially the GC process, may be particularly suitable to separate the sample into a plurality of fractions (also "N fractions"), especially wherein the plurality of fractions separately comprise a plurality of different derivatized organic molecules.

In embodiments, the separation stage may comprise providing N fractions, wherein N≥2, and wherein the preparation stage may comprise contacting the N fractions with N porous single crystals, respectively, to provide N organic molecule doped porous single crystals.

In embodiments, the separation stage may further comprise subjecting the sample to a mass spectrometry process, especially after subjecting the sample to a chromatography process. Especially, the separation stage may comprise subjecting at least part of the fraction comprising the derivatized organic molecule to a mass spectrometry process. Especially, the separation stage may comprise identifying whether the (derivatized) organic molecule can be identified based on the mass spectrometry process (based on the at least part of the fraction), and only providing the (remainder of) the fraction to the preparation stage if the (derivatized) organic molecule was not identified by mass spectrometry.

Especially, in embodiments wherein the separation stage provides a plurality of fractions each comprising different derivatized organic molecules, the separation stage may comprise subjecting the fractions to mass spectrometry to select fractions comprising derivatized organic molecules not identifiable using mass spectrometry, and providing the selected fractions to the preparation stage. Hence, in embodiments, the sample preparation method may further comprise a pre-analysis stage after the separation stage (and before the preparation stage). The pre-analysis stage may comprise subjecting at least part of the fraction to a mass spectrometry process to attempt to identify the derivatized organic molecule. In embodiments, the pre-analysis stage may comprise providing the fraction to the preparation stage if the identification of the derivatized organic molecule with mass spectrometry is unsuccessful. In further embodiments, the pre-analysis stage may comprise terminating the sample preparation method if the identification of the derivatized organic molecule with mass spectrometry is successful.

Hence, in embodiments, the sample preparation method, especially the separation stage, may further comprise an optional pre-analysis stage. The pre-analysis stage may comprise assessing whether the (derivatized) organic molecule is identifiable based on fragmentation patterns obtained from a mass spectrometry process. Hence, the pre-analysis stage may comprise subjecting (at least part of) the sample and/or (at least part of) the fraction comprising the derivatized organic molecule to a mass spectrometry process. In further embodiments, the pre-analysis stage may comprise subjecting (at least part of) the sample to a mass spectrometry process. In further embodiments, the pre-analysis stage may comprise subjecting (at least part of) the fraction to a mass spectrometry process. If the (derivatized) organic molecule is (uniquely) identified, the sample preparation process may be terminated. If the (derivatized) organic molecule has not been identified based on mass spectrometry, the fraction comprising the derivatized organic molecule may be subjected to the preparation stage.

In further embodiments, the separation stage may comprise subjecting the sample to an LCMS process, especially a LCMSMS process, or a GCMS process, especially a GCMSMS process. In further embodiments, the separation stage may comprise subjecting the sample to an LCMS process, especially a LCMSMS process. In further embodiments, the separation stage may comprise subjecting the sample to a GCMS process, especially a GCMSMS process. In embodiments, the sample preparation method may be a non-medical method. Especially, the sample preparation method may be an ex-vivo method.

In embodiments, the sample preparation method may comprise preventing contact between derivatized organic molecule and water, especially water traces and/or air humidity, especially to prevent hydrolyzation of the derivatized organic molecule. Such embodiment may be particularly relevant for embodiments comprising silylation, as silyl groups may be relatively unstable and may tend to hydrolyze relatively easily. In a second aspect, the method of the invention may provide an X-ray analysis method of an organic molecule. The method may comprise a sample providing stage and an analysis stage. The sample providing stage may comprise providing a derivatized organic molecule doped porous single crystal, *i.e.,* a porous single crystal doped with a derivatized organic molecule. The derivatized organic molecule may especially be obtainable using the derivatization stage of the sample preparation method as described herein. In specific embodiments, the derivatized organic molecule may especially comprise a moiety comprising a 3^{rd} period atom comprising group, especially wherein the 3^{rd} period atom is selected from the group consisting of Si, P and S, more especially Si. Especially, the sample providing stage may comprise providing the derivatized organic molecule doped porous single crystal obtainable according to the sample preparation method as described herein. In embodiments, the sample providing stage may comprise the sample preparation method as described herein. The analysis stage may comprise subjecting the derivatized organic molecule doped porous single crystal to single crystal X-ray analysis.

In embodiments, the analysis stage may comprise subjecting the organic molecule doped porous single crystal to single crystal X-ray analysis. The single crystal X-ray analysis may especially comprise single-crystal X-ray diffraction (SC-XRD).

In further embodiments, the (X-ray analysis) method comprises a sample providing stage and an analysis stage, wherein the sample providing stage comprises providing the derivatized organic molecule doped porous single crystal obtainable according to the sample preparation method as described herein, and wherein the analysis stage comprises subjecting the derivatized organic molecule doped porous single crystal to single crystal X-ray analysis.

In embodiments wherein the sample providing stage comprises providing N derivatized organic molecule doped porous single crystals, especially wherein each of the N organic molecule doped porous single crystals comprise a different derivatized organic molecule, the X-ray analysis may comprise subjecting (each of) the N derivatized organic molecule doped porous single crystals to a single crystal X-ray analysis, respectively.

In embodiments, the X-ray analysis method may provide an X-ray signal, wherein the X-ray signal comprises structure-related information pertaining to the derivatized organic molecule.

In further embodiments, the X-ray analysis method may comprise comparing the X-ray signal to reference X-ray signals comprising structure-related information pertaining to reference (derivatized) organic molecules. The reference X-ray signals may be obtained from a database. Hence, in further embodiments, the X-ray analysis method may comprise comparing the X-ray signal to reference X-ray signals from a database, especially wherein the reference X-ray signals comprise structure-related information pertaining to reference (derivatized) organic molecules.

In further embodiments, the X-ray analysis method may further comprise a structure prediction stage, wherein the structure prediction stage may comprise predicting the structure of the organic molecule based on the X-ray signal. It will be clear to the person skilled in the art that the nature of the introduced moeieties will be considered during the structure prediction stage, *i.e.,* the structure prediction stage may comprise predicting the structure of the organic molecule based on the X-ray signal and the (introduced) moiety.

In embodiments, the X-ray analysis method may comprise a sample providing stage and an analysis stage, wherein the sample providing stage comprises providing the derivatized organic molecule doped porous single crystal obtainable according to the sample preparation method as described herein, and wherein the analysis stage comprises subjecting the derivatized organic molecule doped porous single crystal to single crystal X-ray analysis.

In further embodiments, the X-ray analysis method may comprise providing a sample comprising an organic molecule, wherein the organic molecule comprises a target group, wherein the target group is a nucleophilic group and/or an acidic group; a derivatization stage comprising: derivatizing the target group of the organic molecule with a moiety comprising one or more of (i) a hydrocarbon comprising group and (ii) a 3^{rd} period atom comprising group, wherein the 3^{rd} period atom is selected from the group consisting of Si, P, and S, thereby providing a derivatized organic molecule; a separation stage comprising: subjecting the sample to a separation process to provide a fraction comprising the derivatized organic molecule; a preparation stage comprising: introducing the derivatized organic molecule (from the fraction) into a porous single crystal, to provide a derivatized organic molecule doped porous single crystal; and an analysis stage comprising subjecting the organic molecule doped porous single crystal to single crystal X-ray analysis.

In yet a further aspect, the invention further provides a system comprising one or more of a derivatization unit, a separation unit, a preparation unit, an analysis unit, and a control system. Especially, the system may comprise one or more of the derivatization unit, the separation unit, and the preparation unit, such as two or more, especially all three. Hence, the system may comprise one or more of the herein described different units.

In embodiments, the system comprises the derivatization unit. The system may further comprise a control system, especially configured to control the derivatization unit for executing the derivatization. In yet further embodiments, the system comprises the derivatization unit and the separation unit, wherein the latter is functionally coupled to the former. The system may further comprise a (the) control system, especially configured to control the derivatization unit and the separation unit. The control system may then especially (also) be configured to execute the separation stage.

Alternatively or additionally, in embodiments the system may comprise the preparation unit. The system may further comprise a control system, especially configured to control the preparation unit for executing the preparation (especially introducing the derivatized molecule into the porous single crystal). In yet further embodiments, the system may comprise the preparation unit and the analysis unit, wherein the latter is functionally coupled to the former. The system may further comprise a (the) control system, especially configured to control the preparation unit and the analysis unit. The control system may then especially (also) be configured to execute the analysis stage.

Alternatively or additionally, the system comprises the control system, configured to execute one or more of the derivatization stage, the separation stage, the preparation stage, and the analysis stage, when functionally coupled to one or more of the derivatization unit, the separation unit, the preparation unit, and the analysis unit, respectively. As further also elucidated below, the invention also provides (in an aspect) a computer program product, when running on a computer which is functionally coupled to or comprised by the system, controls one or more controllable elements of such system, especially for executing the respective stage(s), such as one or more of the derivatization stage, the separation stage, the preparation stage, and the analysis stage.

The derivatization unit may be configured to derivatize a target group of an organic molecule, especially with a moiety. The moiety may comprise one or more of (i) a hydrocarbon comprising group and (ii) a 3^{rd} period atom comprising group, especially wherein the 3^{rd} period atom is selected from the group consisting of Si, P, and S. The derivatization unit may thereby (be configured to) provide a derivatized organic molecule. The target group may especially be a nucleophilic group and/or an acidic group. The separation unit may be functionally coupled to the derivatization unit. The separation unit may be configured to subject a sample comprising the derivatized organic molecule to a separation process. The separation process may provide a fraction comprising the (separated) derivatized organic molecule. The preparation unit may be functionally coupled to the separation unit. The preparation unit may be configured to introduce the derivatized organic molecule (from the fraction) into a porous single crystal. The preparation unit may (be configured to) provide a derivatized organic molecule doped porous single crystal.

In embodiments, the system may comprise the analysis unit. The analysis unit may be functionally coupled to the preparation unit. The analysis unit may be configured to subject the organic molecule doped porous single crystal to a single crystal X-ray analysis.

In further embodiments, the system may comprise the control unit. The control system may be configured to control one or more of the derivatization unit, the separation unit, the preparation unit and the analysis unit, especially all of the derivatization unit, the separation unit, the preparation unit and the analysis unit.In embodiments, the system comprises the derivatization unit. The derivatization unit may be configured to derivatize a target group of an organic molecule with a moiety, *i.e.,* the derivatization unit may be configured to contact the organic molecule with a reactant such that the target group is derivatized with the moiety.

The derivatization unit may especially be configured to execute the derivatization stage according to the sample preparation method as described herein.

The derivatization unit may especially comprise a reactor, such as a reactor configured to contact, especially react, two or more molecules.

In embodiments, the system may comprise the separation unit.The separation unit may be functionally coupled to the derivatization unit. Especially, the derivatization unit may be configured to provide (a sample comprising) the derivatized organic molecule to the separation unit.

The separation unit may be configured to subject the sample to a separation process, especially to provide a fraction comprising the derivatized organic molecule, *i.e.,* the separation unit may be configured to separate the sample into a plurality of fractions, wherein a fraction of the plurality of fractions comprises the derivatized organic molecule, essentially wherein the fraction is essentially pure.

The separation unit may especially comprise a chromatography unit, especially a gas chromatography (GC) unit and/or a liquid chromatography (LC) unit. In embodiments, the separation unit may comprise a GC unit. In further embodiments, the separation unit may comprise an LC unit.

Hence, in embodiments, the separation unit may be configured to subject the sample to a chromatography process, especially to provide a fraction comprising the derivatized organic molecule. In further embodiments, the separation unit may be configured to subject the sample to a gas chromatography process. In further embodiments, the separation unit may be configured to subject the sample to a liquid chromatography process.

In further embodiments, the separation unit may comprise a mass spectrometry (MS) unit configured to subject the sample, especially the derivatized organic molecule, to mass spectrometry. In such embodiments, the (separated) derivatized organic molecule provided by the separation unit may be a fragment of the derivatized organic molecule (as provided by the derivatization unit).

In further embodiments, the separation unit may comprise a GC-MS and/or an LC-MS unit. In further embodiments, the separation unit may comprise a GC-MS unit. In further embodiments, the separation unit may comprise an LC-MS unit.

In embodiments, the separation unit may be configured to execute the separation stage according to the sample preparation method as described herein.

In embodiments, the system may comprise the preparation unit. The preparation unit may be functionally coupled to the separation unit, *i.e.,* the separation unit may be configured to provide the fraction (comprising the derivatized organic molecule) to the preparation unit.

The preparation unit may be configured to introduce the derivatized organic molecule into a porous single crystal, *i.e.,* the preparation unit may be configured to contact the fraction, especially the derivatized organic molecule, with the porous single crystal, especially such that the porous single crystal absorbs the derivatized organic molecule.

The preparation unit may be configured to provide a derivatized organic molecule doped porous single crystal, *i.e.,* a porous single crystal doped with (or "comprising") the derivatized organic molecule.

In embodiments, the preparation unit may be configured to execute the preparation stage according to the sample preparation method as described herein.

In embodiments, the system may comprise the analysis unit. The analysis unit may be functionally coupled to the preparation unit, *i.e.,* the preparation unit may be configured to provide the derivatized organic molecule doped porous single crystal to the analysis unit and/or the analysis unit may be configured to analyse the derivatized organic molecule doped porous single crystal in the preparation unit.

In embodiments, the analysis unit may comprise an X-ray analysis unit, especially an X-ray analysis unit configured for single-crystal X-ray diffraction (SC-XRD).

In further embodiments, the analysis unit may be configured to subject the organic molecule doped porous single crystal to single crystal X-ray analysis.

In embodiments, the analysis unit may be configured to provide an X-ray signal, especially wherein the X-ray signal comprises structure-related information pertaining to the derivatized organic molecule.

In further embodiments, the system, especially the control system, may further comprise a structure prediction unit, wherein the structure prediction unit is configured to predict the structure of the organic molecule based on the X-ray signal. It will be clear to the person skilled in the art that the nature of the introduced moeieties may be considered by the structure prediction unit, *i.e.,* the structure prediction unit may be configured to predict the structure of the organic molecule based on the X-ray signal and the (introduced) moiety.

In further embodiments, the analysis unit may be configured to execute the analysis stage according to the X-ray analysis method as described herein.

In embodiments, the system may comprise the control system. The control system may be configured to control the derivatization unit, the separation unit, the preparation unit and/or the analysis unit. In further embodiments, the control system may be configured to control the derivatization unit. In further embodiments, the control system may be configured to control the separation unit. In further embodiments, the control system may be configured to control the preparation unit. In further embodiments, the control system may be configured to control the analysis unit.

In embodiments, the system may comprise: a derivatization unit, configured to derivatize a target group of an organic molecule with a moiety comprising one or more of (i) a hydrocarbon comprising group and (ii) a 3^{rd} period atom comprising group, wherein the 3^{rd} period atom is selected from the group consisting of Si, P, and S, thereby providing a derivatized organic molecule, wherein the target group is a nucleophilic group and/or an acidic group; a separation unit, functionally coupled to the derivatization unit, configured to subject a sample comprising the derivatized organic molecule to a separation process to provide a fraction comprising the derivatized organic molecule; a preparation unit, functionally coupled to the separation unit, configured to introduce the derivatized organic molecule into a porous single crystal, to provide a derivatized organic molecule doped porous single crystal; an analysis unit, functionally coupled to the preparation unit, configured to subject the organic molecule doped porous single crystal to single crystal X-ray analysis; and a control system, configured to control the derivatization unit, the separation unit, the preparation unit and the analysis unit.

In embodiments, the separation unit may comprise one or more of an LC system (also: "LC unit") and a GC system (also "GC unit").

In further embodiments, the separation unit may comprise one or more of a LCMS system and a GCMS system.

In further embodiments, the system may further comprise a solvent exchange unit. The solvent exchange unit may be functionally coupled to the separation unit and to the preparation unit. The solvent exchange unit may be configured to solvent exchange the fraction comprising the derivatized organic molecule from the separation unit and to provide a solvent-exchange fraction comprising the derivatized organic molecule to the preparation unit. In further embodiments, the solvent exchange unit may be configured to execute a solvent exchange by replacing at least part of a first solvent by a second solvent. Especially, the fraction may (initially) comprise a first solvent, such as a protic solvent, and the solvent exchange may comprise replacing at least part of the first solvent by a second solvent, such as an aprotic solvent, *i.e.,* the solvent exchange unit may be configured to provide a (solvent-exchanged) fraction comprising the derivatized organic molecule, wherein the (solvent-exchanged) fraction further comprises a second solvent, especially an aprotic solvent.

In further embodiments, the system may be configured to execute the sample preparation method as described herein and/or the X-ray analysis method as described herein. In further embodiments, the system may be configured to execute the sample preparation method as described herein. In further embodiments, the system may be configured to execute the X-ray analysis method as described herein.

In further embodiments, the control system may be configured to have the system execute the sample preparation method as described herein and/or the X-ray analysis method as described herein. In further embodiments, the control system may be configured to have the system execute the sample preparation method as described herein. In further embodiments, the control system may be configured to have the system execute the X-ray analysis method as described herein.

In further embodiments, the separation unit may be configured to provide N fractions, wherein N≥2, and wherein the preparation unit may be configured to introduce the derivatized organic molecule of each of the N fractions into a respective porous single crystal, to provide respective derivatized organic molecule doped porous single crystals. The embodiments described herein are not limited to a single aspect of the invention. For example, an embodiment describing the sample preparation method with respect to the derivatization stage may, for example, also apply to the X-ray analysis method. Similarly, an embodiment of the sample preparation method describing the materials, such as solvents and/or moieties, may, for example, further apply to the system.

### BRIEF DESCRIPTION OF THE DRAWINGS

Embodiments of the invention will now be described, by way of example only, with reference to the accompanying schematic drawings in which corresponding reference symbols indicate corresponding parts, and in which: Fig. 1A-B schematically depict embodiments of the methods and the system according to the invention; Fig. 2A-B schematically depict embodiments of the derivatization stage; and Fig. 3 schematically depicts an embodiment of the single porous crystal (or: the preparation stage). The schematic drawings are not necessarily to scale.

### DETAILED DESCRIPTION OF THE EMBODIMENTS

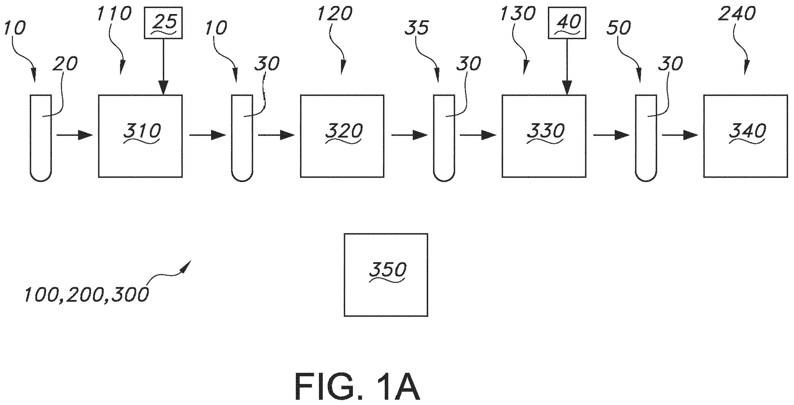

Fig. 1A schematically depicts the sample preparation method 100. The sample preparation method 100 may comprise providing a sample 10 comprising an organic molecule 20, wherein the organic molecule 20 comprises a target group 21, wherein the target group 21 is a nucleophilic group and/or an acidic group. The sample preparation method may further comprise a derivatization stage 110, a separation stage 120, and a preparation stage 130. The derivatization stage 110 may comprise derivatizing the target group 21 of the organic molecule 20 with a moiety 31, especially a moiety 31 comprising one or more of (i) a hydrocarbon comprising group and (ii) a 3rd period atom comprising group, especially wherein the 3rd period atom is selected from the group consisting of Si, P, and S. The derivatization stage may (thereby) provide a derivatized organic molecule 30, especially the sample 10 comprising the derivatized organic molecule. In the depicted embodiment, the derivatization stage 110 comprises contacting the organic molecule with a reactant 25 such that the target group 21 of the organic molecule 20 is derivatized with the moiety 31. The separation stage 120 may comprise subjecting the sample 10 to a separation process to provide a fraction 35 comprising the derivatized organic molecule 30. The preparation stage 130 may comprise introducing the derivatized organic molecule 30 into a porous single crystal 40, to provide a derivatized organic molecule doped porous single crystal 50.

In embodiments, the organic molecule 20 may be selected from the group consisting of an organic biomolecule, especially an organic biological molecule, or especially a biologically active organic molecule.

In embodiments, the separation stage 120 may comprise providing N fractions 35, wherein N≥2, and wherein the preparation stage 130 comprises contacting the N fractions with N porous single crystals 40, respectively, to provide N organic molecule doped porous single crystals 50.

Fig. 1A further depicts an embodiment of the X-ray analysis method 200 of an organic molecule 20 as described herein. The X-ray analysis method may comprise a sample providing stage and an analysis stage 240, wherein the sample providing stage may comprise providing the derivatized organic molecule doped porous single crystal 50 obtainable according to the sample preparation method 100, and wherein the analysis stage 240 may comprise subjecting the organic molecule doped porous single crystal 50 to single crystal X-ray analysis.

In embodiments wherein the sample providing stage comprises providing N organic molecule doped porous single crystals 50, the X-ray analysis method 200, especially the analysis stage 240, may comprise subjecting each of the N organic molecule doped porous single crystals 50 to a single crystal X-ray analysis, respectively.

Fig. 1A further depicts an embodiment of the system 300 according to the invention. The system may comprise a derivatization unit 310, a separation unit 320, a preparation unit 330, an analysis unit 340 and a control system 350. The derivatization unit 310 may be configured to derivatize a target group 21 of an organic molecule 20 with a moiety 31, especially a moiety 31 comprising one or more of (i) a hydrocarbon comprising group and (ii) a 3rd period atom comprising group, especially wherein the 3rd period atom is selected from the group consisting of Si, P, and S. The derivatization unit 310 may be configured to provide a derivatized organic molecule 30. The separation unit 320 may be functionally coupled to the derivatization unit 310. The separation unit 320 may be configured to subject a sample 10 comprising the derivatized organic molecule 30 to a separation process to provide a fraction 35 comprising the derivatized organic molecule 30. The preparation unit 330 may be functionally coupled to the separation unit 320. The preparation unit may be configured to introduce the derivatized organic molecule 30 into a porous single crystal 40, especially to provide a derivatized organic molecule doped porous single crystal 50. The analysis unit 340 may be functionally coupled to the preparation unit 330. The analysis unit may be configured to subject the organic molecule doped porous single crystal 50 to single crystal X-ray analysis. The control system 350 may be configured to control one or more of the derivatization unit 310, the separation unit 320, the preparation unit 330 and the analysis unit 340.

In the depicted embodiment, the sample preparation method 100 is carried out using the system 300 as described herein. Hence, in embodiments, the system 300 may be configured to execute the sample preparation method 100 as described herein and/or the X-ray analysis method 200 as described herein. It will be clear to the person skilled in the art, however, that the sample preparation method 100 and/or the X-ray analysis method 200 may also be carried out without using the system 300 according to the invention.

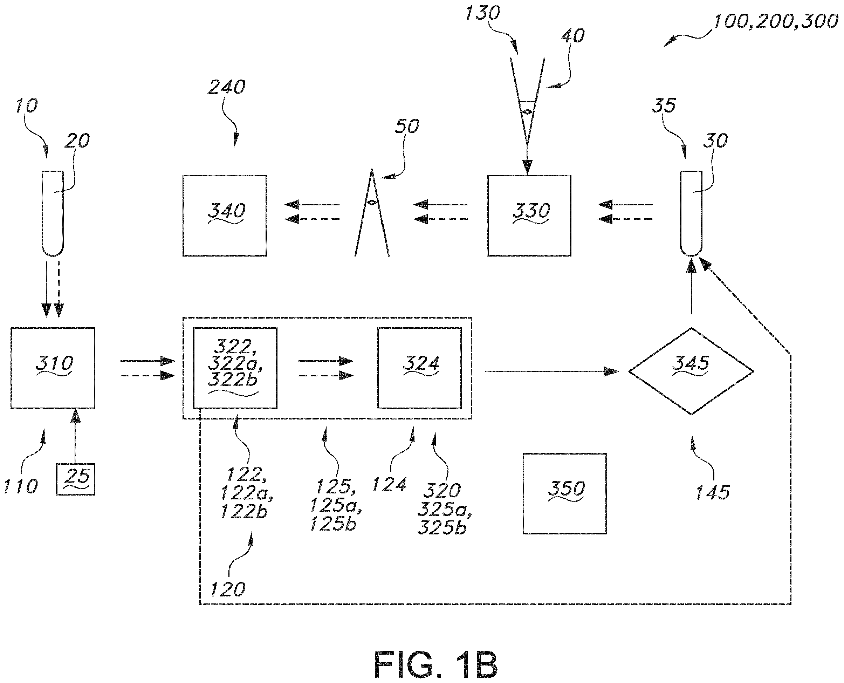

Fig. 1B schematically depicts another embodiment of the sample preparation method (100). For visualization purposes only, the process steps are indicated with solid arrows, whereas the flow of analyte is indicated with hyphenated arrows. In the depicted embodiment, the separation stage 120 comprises subjecting the sample 10 to a chromatography process 122, especially an LC process 122, 122a or a GC process 122, 122b. In the depicted embodiment, the separation stage 120 further comprises subjecting the sample 10 to a mass spectrometry process 124. Hence, the separation stage may comprise subjecting the sample to an LCMS process 125, 125a or a GCMS process 125, 125b. in further embodiments, at least part of the fraction 35 comprising the derivatized organic molecule may be subjected to a mass spectrometry process 124. The remainder of the fraction 35 may be provided to the separation stage.

In further embodiments, the separation stage 120 may comprise executing a solvent exchange by replacing at least part of a first solvent, especially a protic solvent, by a second solvent, especially an aprotic solvent. Especially, the separation stage may comprise executing a solvent exchange by replacing at least part of a first solvent in the sample 10 by a second solvent. Especially, the separation stage 120 may comprise first executing a solvent exchange and then subjecting the sample 10 to an LC process 122, 122a or a GC process 122, 122b. Further, the separation stage 120 may comprise subjecting the sample 10 to an LC process 122, 122a or a GC process 122, 122b and then executing a solvent exchange. Hence, after the GC and/or LC process, the fraction comprising the derivatized organic molecule may be dissolved in a first solvent, and the sample preparation stage may comprise executing the solvent exchange by replacing at least part of the first solvent by a second solvent.

In the depicted embodiment, the sample preparation method 100 further comprises an optional pre-analysis stage 145, the pre-analysis stage 145 comprising assessing whether the (derivatized) organic molecule 20 is identifiable based on fragmentation patterns obtained from the mass spectrometry process 124. If the (derivatized) organic molecule is (uniquely) identified, the sample preparation process may be terminated. If the (derivatized) organic molecule has not yet been identified, the fraction 35 comprising the derivatized organic molecule 30 may be subjected to the preparation stage 130. Hence, in the depicted embodiment, the process may continue from the pre-analysis stage 145 to the preparation stage 130 or may be terminated after the pre-analysis stage 145.

Specifically, in the depicted embodiment, the sample preparation method 100 further comprises a pre-analysis stage 145 after the separation stage 120, the pre-analysis stage 145 comprising subjecting at least part of the fraction 35 to a mass spectrometry process 124 to attempt to identify the derivatized organic molecule 30, wherein the pre-analysis stage 145 comprises providing the fraction 35 to the preparation stage 130 if the identification of the derivatized organic molecule 30 with the mass spectrometry process 124 is unsuccessful, and wherein the pre-analysis stage 145 comprises terminating the sample preparation method 100 if the identification of the derivatized organic molecule 30 with the mass spectrometry process 124 is successful.

Fig. 1B further schematically depicts another embodiment of the system 300. In the depicted embodiment, the system 300, especially the separation unit 320, comprises a chromatography unit 322, especially an LC unit 322, 322a (or: "LC system") or a GC unit 322, 322b (or "GC system"). In the depicted embodiment, the separation unit 320 may comprise a mass spectrometry unit 324 (also: "mass spectrometry system") configured to subject the sample to a mass spectrometry process 124. Hence, in embodiments, the separation unit may comprise one or more of an LCMS unit 325a (or "LCMS system") and a GCMS unit 325b (or: "GCMS system").

In further embodiments, the system may comprise a solvent exchange unit. The solvent exchange unit may be functionally coupled to the separation unit 320 and to the preparation unit 330. In further embodiments the separation unit may comprise the solvent exchange unit. In further embodiments, the preparation unit may comprise the solvent exchange unit. The solvent exchange unit may be configured to solvent exchange the fraction 35 comprising the derivatized organic molecule 30 and to provide a solvent-exchange fraction. Especially, the solvent exchange unit may be configured to solvent exchange the fraction 35 comprising the derivatized organic molecule 30 from the separation unit 320 and to provide a solvent-exchange fraction comprising the derivatized organic molecule 30 to the preparation unit 330.

In the depicted embodiment, the system 300 further comprises an optional pre-analysis unit 345, wherein the pre-analysis unit 345 may be configured to assess whether the organic molecule 20 is identifiable based on fragmentation patterns obtained from the mass spectrometry unit 324. If the (derivatized) organic molecule is (uniquely) identified, a sample preparation process may be terminated. If the (derivatized) organic molecule has not yet been identified, the fraction 35 comprising the derivatized organic molecule 30 may be provided to the preparation unit 330.

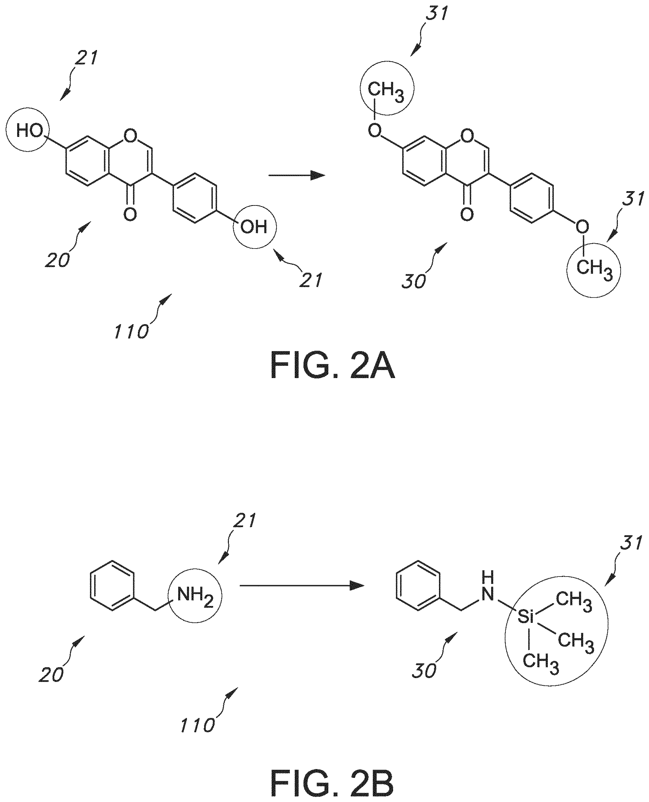

Fig. 2A-B schematically depict embodiments of the derivatization stage 110. The derivatization stage mat comprise derivatizing the target group 21 of the organic molecule 20 with a moiety 31 comprising one or more of (i) a hydrocarbon comprising group and (ii) a 3^{rd} period atom comprising group, wherein the 3^{rd} period atom is selected from the group consisting of Si, P, and S, thereby providing a derivatized organic molecule 30.

In particular, Fig. 2A schematically depicts derivatizing two target groups 21 of the organic molecule 20 daidzein having targets groups 21 comprising -OH with a moiety 31 comprising methyl to provide the derivatized organic molecule 30 dimethylaidzein. In alternative embodiments, the organic molecule daidzein may be derivatized with a moiety 31 comprising trimethylsilyl to provide the trimethylsilyl derivative of daidzein as described in C. S. Creaser, M. R. Koupai-Abyazani and G. R. Stephenson, Journal of Chromatography, 1989, 478, 415-21, which is hereby herein incorporated by reference.

Fig. 2B schematically depicts an embodiment comprising derivatizing the organic molecule 20 benzylamine having a target group 21 comprising -NH₂ with a moiety 31 comprising trimethylsilyl to provide its trimethylsilyl derivative. The derivatization may be performed using the procedure described in C. Bellini, T. Roisnel, J. -F. Carpentier, S. Tobisch and Y. Sarazin, Chem.Eur.J. 2016, 22,15733-15743; A. V. Lebedev, A. B. Lebedeva, V. D. Sheludyakov, S. N. Ovcharuk, E. A. Kovaleva and O. L. Ustinova, Russian Journal of General Chemistry, 2006, 76, 469-477, which is hereby herein incorporated by reference. In further embodiments, the organic molecule 20 phenethylamine may be derivatized with a moiety 31 comprising trimethylsilyl, especially using the same procedure.

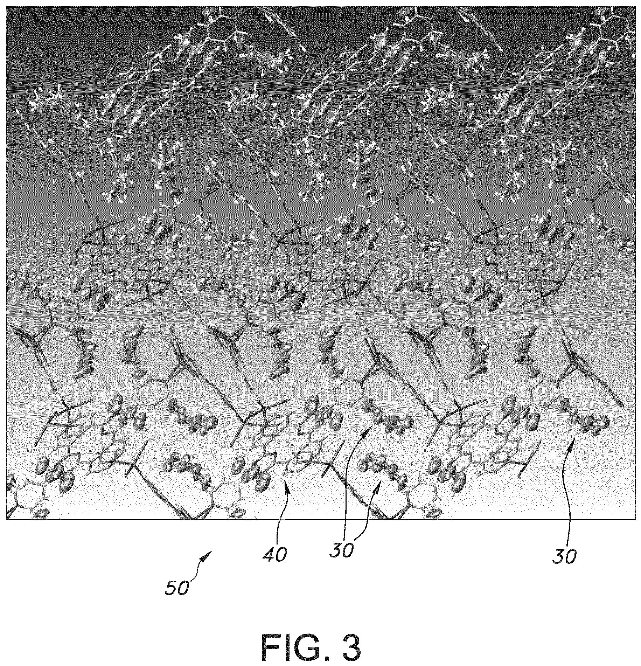

Fig. 3 schematically depicts an embodiment of the derivatized organic molecule doped porous single crystal 50, *i.e.* the derivatized organic molecule 30 has been introduced into the porous single crsystal 40. In the depicted embodiment, the derivatized organic molecule 30 comprises dimethyldaidzein.

In the depicted embodiment, the porous single crystal 40 comprises a metal-organic framework material. Specifically, in the depicted embodiment the porous single crystal 40 comprises tpt-ZnX₂, wherein X = Cl or Br or I.

### Experimental methods.

Procedure 1 - absorption of an organic molecule into a single porous crystal. Specifically, procedure 1 describes absorption of an organic molecule into a crystalline sponge comprising 2 tpt . 3 ZnCl2, wherein tpt indicates tris-pyridinyl triazine. The organic molecule is first dissolved in trichloro methane (chloroform), *i.e.,* the sample comprises the organic molecule in trichloro methane. The procedure comprises the steps:
i - 1 mg of organic molecule is dissolved in 1 ml of chloroform at room temperature. (Proportionally lower quantities can be used, depending on the available amount of analyte.)
ii - A single crystal of 2 tpt · 3 ZnCl₂ crystal sponge of about 100 µm diameter, which has been visually inspected under a microscope and found to be without twinning or visible cracks, is placed in a septum screw-top glass vial with conically pointed bottom, submerged in 50 µl of cyclohexane.
iii - 4.5 µl of the solution obtained in step (i) (containing 4.5 µg of analyte) is added to the crystalline sponge in cyclohexane as described in step (ii).
iv - The screw-top is closed, and the septum is pierced with a medical-type syringe needle, which may be left in that position to enable slow solvent evaporation. This assembly is incubated at 50°C for 24 or more hours. Most of the solvent may evaporate in the process.
v - After 24 or more hours the process is complete, and the crystal can be used for single-crystal X-ray diffraction for determination of the analyte's chemical structure.

The experiments A-C described herein were performed using above-described procedure 1.

### Experiment A:

Procedure 1 was applied to 4',7-dihydroxy isoflavone (daidzein) as model organic molecule. It was observed that at 20°C about 0.005 mg analyte could be dissolved in 1 ml chloroform. This means that the solution of 1 mg analyte in 1 ml solvent required by Step 1 of the above Standard Procedure cannot be prepared, due to limited solubility.

### Experiment B:

4',7-Dihydroxy isoflavone was derivatized into 4',7-dimethoxy isoflavone. Methylation can be performed e.g. with dimethyl carbonate or with methyl iodide and potassium carbonate.

### Experiment C:

The derivatized organic molecule (4',7-dimethoxy isoflavone obtained from Experiment B) was dissolved in chloroform. A solution of 1 mg analyte in 1 ml chloroform could be prepared without difficulty, owing to the reduced polarity of 4',7-dimethoxy isoflavone as compared with the underivatized analyte 4',7-dihydroxy isoflavone. Addition of 4.5 µl standard solution to 2 tpt . 3 ZnCl₂ crystal sponge in 50 µl of cyclohexane and incubation at 50°C for 24 h or more (see Procedure 1) resulted in analyte absorption and subsequent successful determination of the analyte structure with X-ray analysis. 100% occupancy of analyte in the crystal sponge unit cell was observed, along with 2 molecules of chloroform per unit cell.

In conclusion, the solubility problem observed in Experiment A was resolved through analyte derivatization according to Experiment B. By means of Experiment C, analyte derivatization was confirmed to extend the scope of applicability of the Procedure 1.

### Experiments D-K can be performed.

### Experiment D:

4',7-Dihydroxy isoflavone is converted into its trimethylsillyl derivative using the procedure described in C. S. Creaser, M. R. Koupai-Abyazani and G. R. Stephenson, Journal of Chromatography, 1989, 478, 415-21, which is hereby herein incorporated by reference.

### Experiment E:

The trimethylsillyl derivative (obtained from Experiment D) is dissolved in dichloromethane (1mg/1mL). Addition of 4.0 µl standard solution to [(ZnCl₂)₃(tpt)₂·(cyclohexane)ₓ] (tpt = 1,3,5-tris(4-pyridyl)triazine) crystal sponge in 50 µl of cyclohexane and incubation at 50°C for 24 h (see Procedure 1) results in analyte absorption and subsequent determination of the analyte structure in XRD.

### Experiment F:

Primary amines are nucleophilic, and they tend to destroy the crystal sponge during analyte soaking procedure. For example, addition of 4.0 µl standard solution of benzylamine or Phenethylamine (dissolved 1mg/1mL in dichloromethane) to [(ZnCl₂)₃(tpt)₂·(cyclohexane)ₓ] (tpt = 1,3,5-tris(4-pyridyl)triazine) crystal sponge in 50 µl of cyclohexane and incubation at 50°C for 24 h (see Procedure 1) results in completely cracked sponge crystals and subsequent determination of the analyte structure using XRD is not possible.

### Experiment G:

Benzylamine or Phenethylamine is converted into its trimethylsillyl derivative using the procedures described in C. Bellini, T. Roisnel, J. -F. Carpentier, S. Tobisch and Y. Sarazin, Chem.Eur.J. 2016, 22,15733-15743; and A. V. Lebedev, A. B. Lebedeva, V. D. Sheludyakov, S. N. Ovcharuk, E. A. Kovaleva and O. L. Ustinova, Russian Journal of General Chemistry, 2006, 76, 469-477, which are hereby herein incorporated by reference.

### Experiment H:

The trimethylsillyl derivative (obtained from Experiment G) is dissolved in dichloromethane (1mg/1mL). Addition of 4.0 µl standard solution to [(ZnCl2)₃(tpt)₂·(cyclohexane)ₓ] (tpt = 1,3,5-tris(4-pyridyl)triazine) crystal sponge in 50 µl of cyclohexane and incubation at 50°C for 24 h (see Procedure 1) results in analyte absorption and subsequent determination of the analyte structure in XRD.

### Experiment I:

Benzyl trimethylsilyl ether is dissolved in dichloromethane (1mg/1mL). Addition of 4.0 µl standard solution to [(ZnCl₂)₃(tpt)₂·(cyclohexane)ₓ] (tpt = 1,3,5-tris(4-pyridyl)triazine) crystal sponge in 50 µl of cyclohexane and incubation at 50°C for 24 h (see Procedure 1) results in analyte absorption and subsequent determination of the analyte structure in XRD. Benzyl trimethylsilyl ether may be a commercially available silylated derivative of benzyl alcohol.

### Experiment J:

N-Benzyl-1,1,1-trimethylsilanamine is dissolved in dichloromethane (1mg/1mL). Addition of 4.0 µl standard solution to [(ZnCl₂)₃(tpt)₂·(cyclohexane)ₓ] (tpt = 1,3,5-tris(4-pyridyl)triazine) crystal sponge in 50 µl of cyclohexane and incubation at 50°C for 24 h (see Procedure 1) results in analyte absorption and subsequent determination of the analyte structure in XRD. N-Benzyl-1,1,1-trimethylsilanamine may be a commercially available silylated derivative of benzyl amine.

The term "plurality" refers to two or more. Furthermore, the terms "a plurality of' and "a number of' may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101 % of the values(s) it refers to.

The term "comprise" includes also embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment", and similar terms, may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The term "controlling" and similar terms herein especially refer at least to determining the behavior or supervising the running of an element, such as a unit. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system (also: "controller"). The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A sample preparation method (100) comprising:
- providing a sample (10) comprising an organic molecule (20), wherein the organic molecule (20) comprises a target group (21), wherein the target group (21) is a nucleophilic group, and/or an acidic group;
- a derivatization stage (110) comprising: derivatizing the target group (21) of the organic molecule (20) with a moiety (31) comprising one or more of (i) a hydrocarbon comprising group and (ii) a 3^{rd} period atom comprising group, wherein the 3^{rd} period atom is selected from the group consisting of Si, P, and S, thereby providing a derivatized organic molecule (30);
- a separation stage (120) comprising: subjecting the sample (10) to a separation process to provide a fraction (35) comprising the derivatized organic molecule (30);
- a preparation stage (130) comprising: introducing the derivatized organic molecule (30) into a porous single crystal (40), to provide a derivatized organic molecule doped porous single crystal (50).

2. The sample preparation method (100) according to any one of the preceding claims, wherein the sample (10) comprises a protic solvent, wherein the separation stage (120) further comprises executing a solvent exchange by replacing at least part of the protic solvent by an aprotic solvent, and wherein, the separation stage (120) comprises subjecting the sample to an LC process or GC process.

3. The sample preparation method (100) according to any one of the preceding claims, wherein the porous single crystal (40) comprises a metal-organic framework material, wherein the metal-organic framework material is tpt-ZnX₂ based where X = Cl or Br or I.

4. The sample preparation method (100) according to any one of the preceding claims, wherein the organic molecule (20) is selected from the group consisting of an organic biomolecule, and wherein the target group (21) is selected from the group consisting of -OH, - COOH, -NH₂, -NRH, and -SH.

5. The sample preparation method (100) according to any one of the preceding claims, wherein the moiety (31) comprises the hydrocarbon comprising group, wherein the moiety comprises an aliphatic group and/or an alkyl group and/or a methyl group, and/or an aromatic group, especially wherein the aromatic group comprises a phenyl group or a benzyl group.

6. The sample preparation method (100) according to any one of the preceding claims, wherein the moiety (31) comprises the 3^{rd} period atom comprising group, wherein the 3^{rd} period atom is selected from the group consisting of Si, P, and S.

7. The sample preparation method (100) according to claim 6, wherein the 3^{rd} period atom comprises Si, and wherein the moiety (31) comprises a group selected from the group consisting of -SiR₃, -SiArR₂, -SiAr₂R, -SiAr₃, wherein R is selected from the group consisting of methyl, ethyl, propyl, isopropyl, and wherein Ar is -C₆H₅.

8. The sample preparation method (100) according to any one of the preceding claims, wherein the separation stage (120) comprises providing N fractions (35), wherein N≥2, and wherein the preparation stage (130) comprises contacting the N fractions with N porous single crystals (40), respectively, to provide N organic molecule doped porous single crystals (50).

9. The sample preparation method (100) according to any one of the preceding claims, wherein the sample preparation method (100) further comprise a pre-analysis stage (145) after the separation stage (120), the pre-analysis stage (145) comprising subjecting at least part of the fraction (35) to a mass spectrometry process (124) to attempt to identify the derivatized organic molecule (30), wherein the pre-analysis stage (145) comprises providing the fraction (35) to the preparation stage (130) if the identification of the derivatized organic molecule (30) with the mass spectrometry process (124) is unsuccessful, and wherein the pre-analysis stage (145) comprises terminating the sample preparation method (100) if the identification of the derivatized organic molecule (30) with the mass spectrometry process (124) is successful.

10. An X-ray analysis method (200) of an organic molecule (20), the method comprising a sample providing stage and an analysis stage (240), wherein the sample providing stage comprises providing the derivatized organic molecule doped porous single crystal (50) *obtainable* according to any one of the preceding claims 1-9, and wherein the analysis stage (240) comprises subjecting the derivatized organic molecule doped porous single crystal (50) to single crystal X-ray analysis.

11. The X-ray analysis method (200) according to claim 10, comprising subjecting each of the N derivatized organic molecule doped porous single crystals (50) according to claim 8 to a single crystal X-ray analysis, respectively.

12. A system (300) comprising:
- a derivatization unit (310), configured to derivatize a target group (21) of an organic molecule (20) with a moiety (31) comprising one or more of (i) a hydrocarbon comprising group and (ii) a 3^{rd} period atom comprising group, wherein the 3^{rd} period atom is selected from the group consisting of Si, P, and S, thereby providing a derivatized organic molecule (30), wherein the target group (21) is a nucleophilic group, and/or an acidic group;
- a separation unit (320), functionally coupled to the derivatization unit (310), configured to subject a sample (10) comprising the derivatized organic molecule (30) to a separation process to provide a fraction (35) comprising the derivatized organic molecule (30);
- a preparation unit (330), functionally coupled to the separation unit (320), configured to introduce the derivatized organic molecule (30) into a porous single crystal (40), to provide a derivatized organic molecule doped porous single crystal (50);
- an analysis unit (340), functionally coupled to the preparation unit (330), configured to subject the organic molecule doped porous single crystal (50) to single crystal X-ray analysis;
- a control system (350), configured to control the derivatization unit (310), the separation unit (320), the preparation unit (330) and the analysis unit (340).

13. The system (300) according to claim 12, wherein the separation unit (320) comprises one or more of a LC system (322a) and a GC system (322b), especially one or more of a LCMS system (325a) and a GCMS system (325b).

14. The system (300) according to any one of the preceding claims 12-13, further comprising a solvent exchange unit, functionally coupled to the separation unit (320) and to the preparation unit (330), configured to solvent exchange the fraction (35) comprising the derivatized organic molecule (30) from the separation unit (320) and to provide a solvent-exchange fraction comprising the derivatized organic molecule (30) to the preparation unit (330), and wherein the separation unit (120) is configured to provide N fractions (35), wherein N≥2, and wherein the preparation unit (330) is configured to introduce the derivatized organic molecule (30) of each of the N fractions (35) into a respective porous single crystal (40), to provide respective derivatized organic molecule doped porous single crystals (50).

15. The system (300) according to any one of the preceding claims 12-15, wherein the system (300) is configured to execute the sample preparation method (100) according to any one of the preceding claims 1-9 and/or the X-ray analysis method (200) according to any one of the preceding claims 10-11.
